# EUROPEAN PATENT SPECIFICATION

(11) **EP 1 740 487 B1**
(45) Date of publication and mention of the grant of the patent: **11.03.2009**
(21) Application number: 05722074.1
(22) Date of filing: 24.03.2005
(51) Int. Cl.: B65G 57/26

(54) **APPARATUS AND METHOD FOR STACKING OBJECTS**
VORRICHTUNG UND VERFAHREN ZUM STAPELN VON OBJEKTEN
GERBEUR ET PROCEDE

(30) Priority: 26.03.2004 NL 1025826
(43) Date of publication of application: 10.01.2007
(73) Proprietor: Jumbo Distributiecentrum B.V., 5462 CE Veghel (NL)
(72) Inventor: LALESSE, Robert, NL-6904 PD Zevenaar (NL); VAN SCHIJNDEL, Marcel, NL-7141 PA Groenlo (NL)
(74) Representative: van Loon, C.J.J.
(86) International application number: PCT/NL2005/000221
(87) International publication number: WO 2005/092753

(56) References cited:
- EP-A- 1 151 944
- DE-A- 4 109 209
- DE-B- 1 264 336
- US-A- 5 957 517
- PATENT ABSTRACTS OF JAPAN vol. 010, no. 270 (M-517), 13 September 1986 (1986-09-13) -& JP 61 094930 A (HITACHI LTD), 13 May 1986 (1986-05-13)

## Description

The invention relates to an apparatus and a method for stacking objects, as well as to the use of such an apparatus and a goods distribution system provided with such an apparatus.

Such an apparatus is known from practice and is for instance used for stacking objects, for instance products, packages, boxes and the like onto each other in a stacking area. The apparatus can operate in, for instance, normal working environments such as storehouses and production buildings, and in cold stores, temperature controlled environments and/or other environments. As a rule, a stack conveying means, for instance a pallet, platform, container, roller container or the like is arranged in the stacking area for stacking the objects thereon. Then, by means of the stack conveying means, the stack composed from the objects can for instance be conveyed further, be stored and the like. The objects can for instance be collected in stacks for the purpose of preparing specific orders, deliveries and the like. The apparatus for stacking the objects can be used in, for instance, a distribution system for goods, a 'total-supply-chain', of, for instance, a store chain and the like.

A drawback of the known apparatus is that the stacks formed therewith prove to be or may become unstable, in particular when different objects having different sizes and/or shapes have been stacked onto each other over a relatively large distance. That is why objects in a thus formed stack can relatively easily shift, come loose, become damaged and the like.

The Offenlegungsschrift DE 41 09 209 A1 describes an apparatus for stacking planks. As shown in this document, the planks have substantially the same dimensions. The apparatus has a feed for taking the planks to a stacking area. A fixing device is mounted above the stacking area for fixing planks fed to this stacking area when the feed is being drawn back. Between each layer of planks, spacers are provided in the stack. As a result, during use of this apparatus, the planks are not stacked directly onto each other, which leads to a relatively voluminous stack. The known apparatus does furthermore not allow relatively rapid and accurate stacking of objects onto each other in stacking patterns.

US patent US 4.014,441 describes an apparatus for stacking bricks of the same size onto each other in specific stacking patterns. The known apparatus is provided with liftable gripper frames with elongated inflatable grippers for lifting rows of bricks and taking them to a stack. This apparatus is not suited for stacking objects of different shapes and/or sizes onto each other in a rapid, accurate and stable manner.

EP 1 151 944 A2 discloses a parking unit that presses sideways on a formed product layer, after which the layer is pushed by a continuously circulating bar onto shuttle plates of a loading unit. When the shuttle plates are retracted, the circulating bar ensures that the layer is held in place. The apparatus for stacking objects disclosed in EP 1 151 944 A2 is conform to the preamble of claim 1.

Auslegeschrift 1 264 336 discloses a machine for stacking squareshaped objects onto pallets. During operation, a transfer plate holds the objects above the pallet. Support pins are moved downwardly into spaces between the objects, to hold the objects together when the plate is being retracted.

The object of the invention is to provide an improvement of the apparatus mentioned in the opening paragraph. In particular, the object of the invention is an apparatus with which objects can be stacked relatively rapidly, preferably in layers, in a stable and inexpensive manner.

According to the invention, the apparatus is characterized to this end by the features of claim 1.

According to the invention, the apparatus is provided with positioning means which are designed for ranging the objects in specific, substantially horizontal stacking patterns, while the apparatus is provided with conveying means which are designed for conveying the objects from the positioning means to a stacking area for stacking the objects onto another. The conveying means are at least provided with a first conveyor which is designed for supporting each object, during transport, at an underside. The apparatus is provided with stacking pattern maintaining means which are at least designed for substantially maintaining the stacking patterns during the stacking of each object in the stacking area. These maintaining means are designed for substantially maintaining the stacking patterns during transport of the objects from the positioning means to the stacking area. At least several of the objects mentioned have different shapes and/or dimensions.

As a result, during use, the objects can first be positioned by the positioning means in suitable patterns. Then, the objects are taken from the positioning means by conveying means to the stacking area. Then, the stacking pattern maintaining means ensure that the stacking patterns are maintained during the stacking of each object in the stacking area. As a result, the objects can be stacked onto each other relatively rapidly, in a stacking pattern suitable for stable stacking.

As the maintaining means according to the invention are also designed for substantially maintaining the stacking patterns during transport of the objects from the positioning means to the stacking area, the stacking patterns, and optionally, preferably spaces thereof without objects, can already be maintained during transport to the stacking area so that the stacking patterns are prevented from becoming disturbed during and/or under the influence of this transport. Then, after this transport, the maintaining means can simply ensure that the objects substantially retain the stacking patterns during stacking of the objects. Thus, the objects can first rapidly be ranged by the positioning means in specific patterns suitable for stable stacking, to then be transported thus arranged and be stacked onto each other, for obtaining a stable stack of objects.

At least a number of the stacking patterns are provided with one or more spaces without objects.

With such stacking patterns, a stable stack can be formed in a simple manner, in particular from the objects having different dimensions and/or shapes. The stacking patterns provided with areas without objects are maintained under the influence of the maintaining means, during the stacking of the respective objects and during transport to the stacking area. To this end, the maintaining means are designed to fill the spaces without objects at least partly with filling means. Preferably, the maintaining means are designed to remove these filling means from the spaces without objects again after associated stacking patterns have been introduced into the stacking area in order that the filling means can be used for maintaining empty spaces of other stacking patterns. It is preferred that the spaces without objects be formed by the positioning means mentioned.

The spaces without objects can extend between for instance a number of objects of each stacking pattern, in particular between outsides of the objects. The objects can then be spread relative to each other in one or more horizontal directions for the purpose of aligning a stack to be formed at the sides. Such a stack, whose content is aligned at least at the sides, is relatively stable. Moreover, such a stack can be packaged and/or kept together well, for instance by wrapping the ready stack in foil or the like.

Spaces without objects can also be provided in each stacking pattern in different manners, for instance when each stacking pattern comprises only one or a limited number of objects, while the space without object defines the object, viewed in horizontal direction. Such a stacking pattern provided with few objects may for instance serve for replenishing a space without objects of a preceding stacking pattern.

A further aspect of the invention is characterized by the features of claim 31.

As the apparatus provided by the invention can be used for stacking objects, the objects can be stacked onto each other relatively rapidly and stably in desired stacking patterns.

The invention further relates to a method for stacking objects. According to the invention, the method is characterized by the features of claim 32. Objects are ranged in specific, substantially horizontal stacking patterns while thereupon, the objects are conveyed by a conveyor to a stacking area to be stacked. Maintaining means maintain the stacking patterns substantially during the stacking of each object in the stacking area. The conveyor is designed to support each object, during transport, at an underside. The maintaining means move along with the objects during transport of the object to the stacking area. At least a number of said stacking patterns are provided with one or more spaces without objects, while said spaces without objects are maintained by the maintaining means during stacking of the stacking patterns. Filling means are introduced, at least partly, into said spaces without objects for maintaining the stacking patterns.

In this manner, the objects can be stacked relatively rapidly. Moreover, it can thus be well ensured that the objects are stacked in the desired stacking patterns. As the maintaining means move along with the objects during transport of the objects to the stacking area, the stacking patterns can be kept in form by the maintaining means during transport.

At least a number of the stacking patterns are provided with one or more spaces without objects, while during stacking, these spaces without objects are maintained by the maintaining means. Thus, a relatively stable stack can be obtained, in particular from objects of different sizes and/or shapes. Further, the filling means can each time be removed from a stacking pattern during and/or after stacking of the associated products, in order that the filling means can be used for, for instance, maintaining another stacking pattern.

The objects can, for instance, first be brought together and then be spread relative to each other in at least one direction, for forming said spaces without objects.

According to a further aspect of the invention, positioning means are provided which are designed to first bring the objects to be stacked together and to then spread them relative to each other in at least one direction, for forming stacking patterns which are provided with one more spaces without objects.

The invention relates also to a good distribution system according to claim 37.

Further elaborations of the invention are described in the subclaims. Presently, the invention will be further elucidated in and by a number of exemplary embodiments and the drawing. In the drawing:
Fig. 1 shows a schematically cutaway top plan view of an exemplary embodiment of the invention, during stacking of similar objects;
Fig. 2 shows a similar top view as Fig. 1, wherein different sorts of objects are stacked;
Fig. 3 shows a similar view as Fig. 1, wherein stack conveying means are used having a smaller longitudinal dimension;
Fig. 4 shows a similar view as Fig. 1, wherein stack conveying means are used having smaller longitudinal dimensions and smaller transverse dimensions;
Figs. 5A and 5B show perspective front views of two different stacking methods;
Fig. 6 shows a perspective front view of the exemplary embodiment represented in Fig. 1;
Fig. 7 shows a side view of a first detail of the perspective front view represented in Fig. 6;
Fig. 8 shows a side view of a second detail of the perspective front view represented in Fig. 6;
Fig. 9 shows a top plan view of a pattern maintainer of the exemplary embodiment represented in Fig. 1;
Fig. 10 shows a perspective front view of the pattern maintainer represented in Fig. 7;
Fig. 11 shows a similar view as Fig. 10 of an alternative elaboration of the pattern maintainer; and
Fig. 12 shows a detail, in side view, of the alternative elaboration represented in Fig. 11.

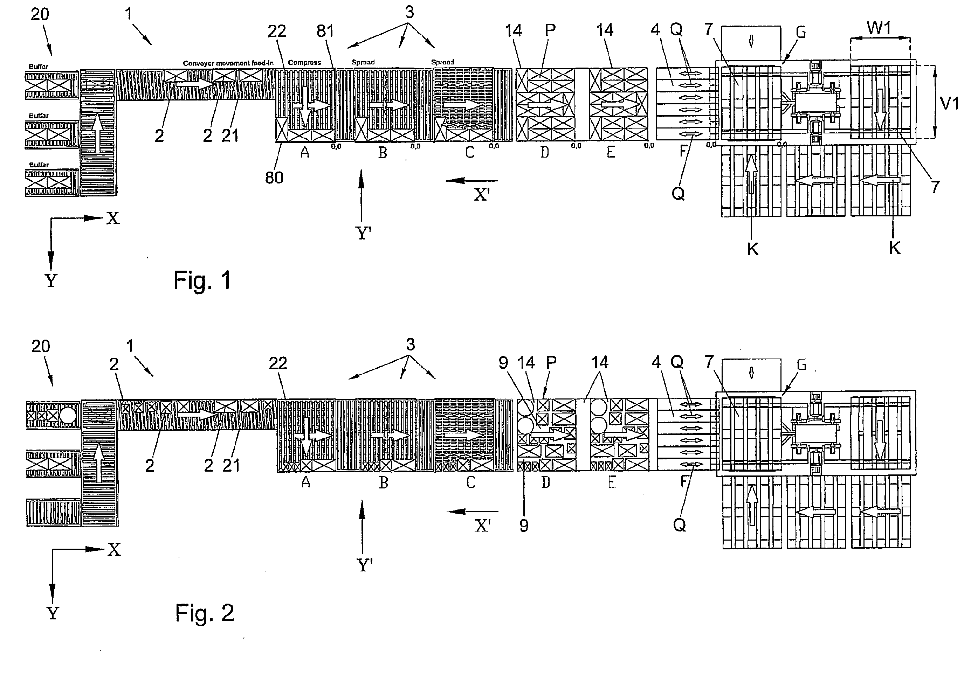

Figs. 1 - 6 show an apparatus 1 for stacking objects 2. The apparatus forms part of, for instance, a goods distribution system or the like. An upstream part of the apparatus 1 is provided with a receiving conveyor 21 for receiving objects 2 to be stacked from, for instance, a object supply device 20 or the like. The supplied objects 2 have may already have been completely or partly sorted in an order suitable for stacking when the objects 2 are being supplied via the supply device 20. Such sorting may for instance have been carried out utilizing sorting means (not shown), calculation software and the like.

A downstream part of the apparatus comprises a stacking area G. During use, stack conveying means 7, for instance pallets or the like, are arranged in the stacking area G for receiving the products 2 in stacking patterns P for the purpose of forming stable stacks 8. Here, the products 2 are stacked substantially layer by layer directly onto each other, which can be done relatively rapidly.

Downstream of the receiving conveyor 21, positioning means are disposed, comprising a positioning apparatus 3. This positioning apparatus 3 is designed for ranging the objects 2 in specific, substantially horizontal stacking patterns P. The positioning apparatus 3 is furthermore designed for positioning the objects 2 such that, if desired, patterns with spaces 9 without objects can be obtained for the purpose of forming a stable stacking. Such spaces 9 without objects extend for instance at sides and/or between opposite sides of the objects 2 of each stacking pattern P. Each space 9 without object is accessible via an upper side of the respective stacking pattern P. Creating stacking patterns P with spaces 9 without objects is particularly advantageous for forming a stack 8 with which the content of the stack 8 is aligned at least at the sides.

In the present exemplary embodiment, the positioning apparatus 3 comprises three stations A, B, C. Each of the stations A, B, C is provided with a number of stops for stopping objects when the objects are moved against these stops in the respective station A, B, C. In Figs. 1, 3 and 4, for the sake of clarity, only a few possible positions of some of the stops are indicated with reference numerals 80, 81, 90, 91, 92, 93.

The first station A serves for bringing together objects received from the receiving conveyor 21 and ranging them in compressed, substantially horizontal layers of objects. To this end, the first station A is provided with conveying means 22, for instance a conveying surface with conveyor rollers or belts, for carrying the objects 2 to a stop point indicated with coordinates 0,0 of a respective stop 80, 81 of the first station A. Here, the objects are moved towards the stop point 0,0 in directions indicated with arrows X and Y such that as few empty spaces as possible are left between the objects 2. These directions comprise a first substantially horizontal direction X and a second substantially horizontal direction Y, which is at right angles to the first direction X. The stop of the first station A comprises, for instance, a stop part 80 arranged in the first horizontal direction X, and a second, movable stop part 81 arranged in the second horizontal direction Y.

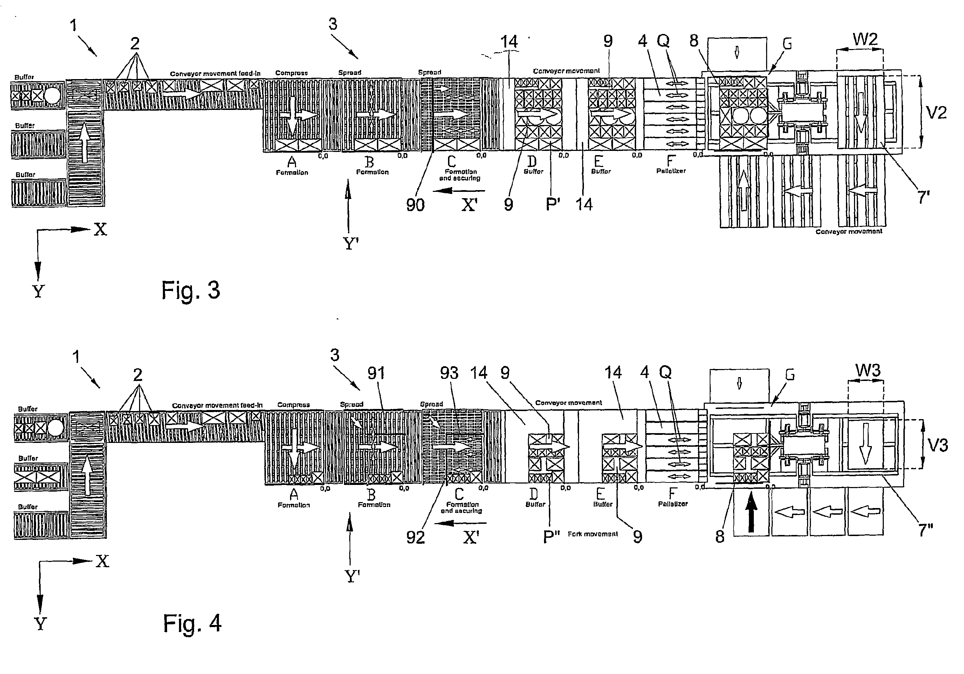

The following, middle station B of the positioning apparatus 3 is a spreading station which is designed for spreading each compressed layer of objects 2 in a second horizontal spreading direction Y', which direction is opposite to the second horizontal direction Y. Here, the objects 2 are moved apart in the second spreading direction Y' such that, viewed from the stop point 0,0 of a respective stop of the second station B, the objects 2 jointly cover a desired second stacking dimension in the second horizontal direction Y. This second stacking dimension is for instance approximately equal to the dimension V1 of the stack conveying means 7, measured in the same direction Y, onto which stack conveying means 7 the products 2 are to be stacked. The second station B may for instance be provided with controllable friction wheels or the like which extend between conveyor rollers and are separately upward movable and/or separately rotatable, for moving objects present in the station B to desired positions in the second spreading direction Y'. Further, the second station B may be provided with one or more stops arranged at sides of the station B located opposite stop point 0,0. Preferably, a latter stop can be moved over a desired distance to the stop point 0,0 for reducing spreading space located between the stops. As a result, a spreading surface of the station B available between the stops can be reduced, in order that a relatively rapid spreading can be obtained when patterns P with smaller footprints are to be formed. An example of such a movable stop is indicated in Fig. 4 with reference numeral 91.

The positioning apparatus 3 is further provided with a station C, also a spreading station, for spreading the layer of objects spread by station B also in the first spreading direction indicated with arrow X', which is opposite to the first horizontal direction X. Viewed from the stop point 0,0 of a respective stop of the third station C, the objects 2 are moved apart in this first spreading direction X' such that the objects 2 jointly cover a desired first stack dimension in the first horizontal direction X. This first stack dimension is for instance approximately equal to the dimension W1 of the stack conveying means 7, measured in the same direction X, on which stack conveying means 7 the products 2 are to be stacked. The spaces 9 without objects can each time be obtained during spreading of compressed objects 2. The third station C is further designed for supplying the ranged objects 2 to the first buffer zone D. Station C may further be provided with one or more stops arranged on sides of the station C located opposite the stop 0, 0, analogous to station B. Examples of the latter stops are indicated in Figs. 3 and 4 with reference numerals 90, 92 and 93.

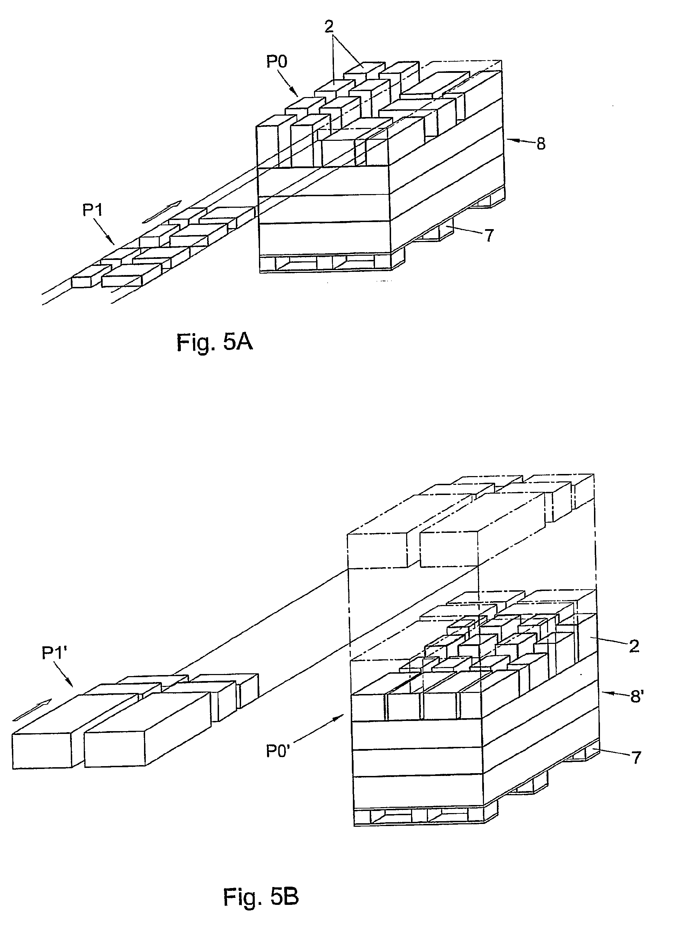

The positioning stations A, B, C can also be used for ranging one or relatively few objects 2 at a desired position in the stacking pattern. As a result thereof, a filling pattern P1 can for instance be formed for filling in a part of a preceding stack layer without object, analogous to, for instance, a stacking step represented in Fig. 5A.

The apparatus 1 is further provided with a first conveyor 4 for taking the objects 2, ranged by the positioning means 3 in stacking patterns P, from a stacking pattern receiving zone F to the stacking area G. The first conveyor 4 is designed for supporting each object 2 at an underside. The first conveyor 4 is movable in a substantially horizontal direction, from a first position outside the stacking area G to a second position within the stacking area G, and in the opposite direction, for bringing objects 2 located thereon into the stacking area G. The first conveyor 4 comprises for instance at least one telescopically movable plate, for instance a fork conveyor which is provided with different telescopically extending fork blades, while, preferably, each plate is separately movable in directions indicated with arrows Q for moving products 2 located thereon. Driving the first conveyor can be carried out in various manners, for instance by a motor, by means of electromagnetic couplings and/or the like. Preferably, top sides of the fork blades are provided with friction reducing means, for instance inserted needles, friction reducing material, roller bodies or the like. Free, crosscut ends of the fork blades can further be provided with, for instance, elastic, slightly downward inclining delivery plates for gradually releasing goods during stacking and guiding them to a stacking location.

Further, a second conveyor 14 is provided extending between the positioning means 3 and the first conveyor 4. The second conveyor 14 serves for conveying the objects 2 ranged in the stacking patterns through the buffer zones D, E and taking them to the first conveyor 4. The second conveyor 14 can be designed in various manners and comprise, for instance, a roller conveyor, belt conveyor or the like. The second conveyor 14 is also designed for supporting the objects 2 during transport.

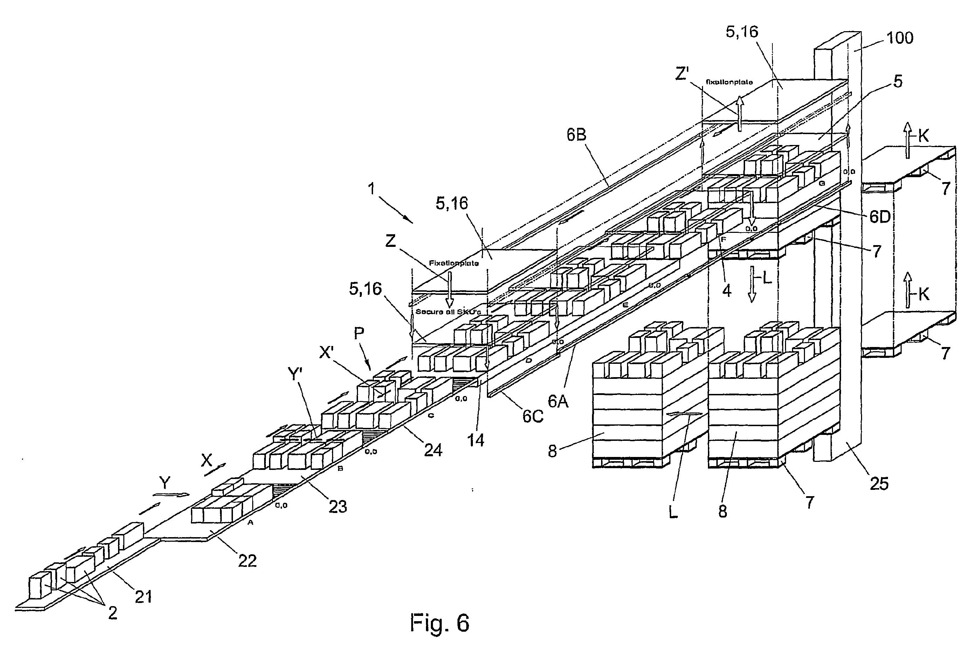

Furthermore, the apparatus 1 comprises lifting means 25 for keeping each stack conveying means 7, during stacking, in the stacking area G at a suitable height for receiving a following layer of products. Such lifting means comprise, for instance, a mast 100 with one or more platforms movable at least in vertical direction. Further, the apparatus is preferably provided with a stack guide, for instance a shaft, for guiding a formed stack part downwards along longitudinal sides. Moreover, the apparatus 1 comprises means for bringing new stack conveying means 1 to the stacking area, and means for discharging stack conveying means 7 provided with stacks 8. Such means can be designed in different manners and comprise, for instance, one or more telescopically extending plates, a fork conveyor and/or one or more other conveyors. Supply and discharge of the stack conveying means 7 is indicated in Figs. 1 and 6 with arrows K and L, respectively.

The apparatus is further provided with means (not shown) for packaging a combined stack at least partly. Such packaging means can for instance comprise a foil applying apparatus, foil wrapper and/or the like. The wrapping means can be provided, for instance, below or near the stacking zone G, the stack guide or the like.

The objects 2 to be stacked can be ranged in the stacking patterns P in various manners, which depends, inter alia, on the shape and dimensions of the objects, and the shape and dimension of the stack conveying apparatuses 7 to be used. In Fig. 1, the objects 2 to be stacked are substantially equal in shape and dimension. Furthermore, in a pattern P packed closely by the positioning apparatus 3, these objects 2 fit on a stacking surface provided by the stack conveying means 7.

In Fig. 2 it is represented how different objects 2 having different shapes and dimensions are positioned by the apparatus 1 in stacking patterns P. In this case, the stacking patterns P are provided by the positioning apparatus 3 with spaces 9 without objects, extending between opposite sides of the objects 2. The objects 2 are ranged in horizontal stacking patterns P such that the thus obtained layers of objects fit on the stack conveying means 7, measured in horizontal direction. The sides of the stacking patterns P are then substantially aligned with each other and, preferably substantially with the sides of the stack conveying means 7. As a result, stable stacks 8 are formed, which can, furthermore, be packaged easily and solidly, for instance in foil, for the purpose of transport.

In Fig. 3 the use is represented of alternative stack conveying means 7' having smaller dimensions W2 in the first horizontal direction X relative to the stack conveying means 7 represented in Figs. 1 and 2. As clearly shown in Fig. 3, in this case, stacking patterns P' with adjusted dimensions V2, W2 are formed by the positioning apparatus 3. Preferably, these stacking patterns P' are substantially aligned with the sides of the respective stack conveying means 7', at least after having been stacked thereon.

In Fig. 4, the use of different, alternative stack conveying means 7" is represented, having smaller dimensions V3 in the second horizontal direction Y relative to the stack transporting means 7' represented in Fig. 3. As shown in Fig. 4, in that case, stacking patterns P" with adjusted dimensions V3, W3 are formed by the positioning apparatus 3, which patterns P" fit on the respective stack conveying means.

Figs. 5A and 5B show further, advantageous methods for composing stacking patterns P, which methods are preferably used by the positioning apparatus 3 of the present apparatus 1. With these methods, the stack 8 is built up from horizontal object patterns P such that during stacking, the stack 8 retains a top side which is as horizontal as possible. As a result, subsequent substantially horizontal stacking layers can, again, be provided on the stack 8 rapidly and easily.

In Fig. 5A, a stack 8 is represented, which is held in the stacking area G by a stack conveying means 7. The stack 8 is provided at the top side with a number of objects 2 ranged in an upper stacking pattern P0. The top side of the upper stacking pattern P0 does not proceed along a substantially horizontal plane, in particular in that the respective objects have different heights. As shown in Fig. 5A, a complementary stacking pattern P1 is composed and stacked onto the upper stacking pattern P0 for, once more, providing the stack 8 with a top side which *does* extend substantially along a horizontal plane. Such a stacking pattern P1 is also called "repair layer". The second stacking pattern P1 consists of relatively few objects 2, slightly spread out relative to each other, viewed in horizontal direction.

With the stack 8 shown in Fig. 5A, only one complementary stacking pattern P1 is to be formed, covering a part of the top side of the stack 8, for the purpose of filling up the stack 8. With the stack 8' shown in Fig. 5B, a complementary stacking pattern P1' is supplied which does extend substantially over the entire stack topside.

The present apparatus 1 is provided with a control (not shown). This control serves for, inter alia, controlling the conveyors mentioned, for controlling the positioning apparatus, for regulating the supply of objects 2, the optional sorting of the objects 2, the defining of positions of objects in the apparatus 1, and for controlling the supply, movement and discharge of the stack conveying means 7. The control can comprise, for instance, one or more regulators, computers, calculating means, memory means, software, one or more suitable formation and stacking algorithms and the like. Preferably, the control is designed for driving the positioning means 3, the object supply device 20, a pre-sorter (not shown) and the like such that desired stacking patterns P are formed for forming stable stacks 8. The control can for instance be designed for controlling the positioning means such that with them, each time, a following stacking pattern P1 is formed which is substantially complementary to a previously formed stacking pattern P0. The control can further be designed for calculating a stable stacking with regard to a group of objects 2 to be stacked onto each other, for instance for the purpose of preparing an order or the like. Such a stacking can for instance comprise a "closely packed" stacking, or a stacking provided with one or more intermediate spaces without object, or with a stacking provided with complementary stacking patterns and/or a combination of these and other stackings.

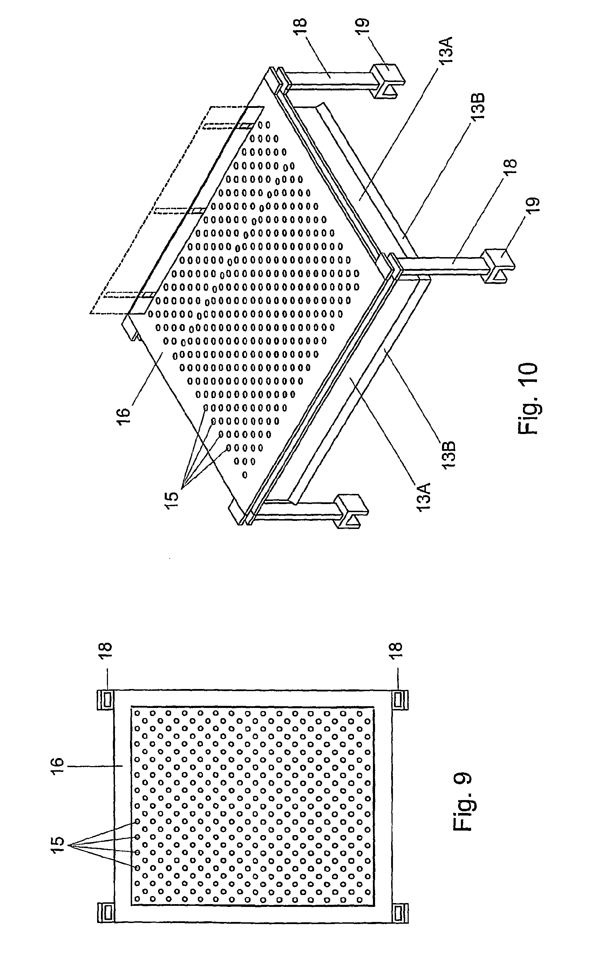

According to the present invention, the apparatus 1 is provided with stacking pattern maintaining means 5 which are designed for substantially maintaining the stacking pattern P during the stacking of each object 2 in the stacking area G. With these maintaining means, the products can be fixed substantially in desired pattern positions, in a substantially form-locked manner. Control of the maintaining means may for instance be carried out by the above-mentioned control. Exemplary embodiments of the maintaining means 5 are described in the following with reference to Figs. 6 - 12.

In the present exemplary embodiment, the maintaining means 5 mentioned are movable from the first buffer zone D to the stacking area G for the purpose of maintaining the stacking patterns P during transport of the objects 2. Furthermore, each time after stacking objects, the maintaining means 5 can be moved back from the stacking area G to the first buffer zone D, in particular such that the returning maintaining means 5 are at a distance from and/or at a different level relative to subsequent objects 2 conveyed by the first and second conveyor 4, 14. Alternatively, the maintaining means 5 can for instance be arranged so as to be movable from a position at the positioning means 3 towards the stacking area G, and preferably in reverse direction, for instance from the third station C towards the stacking area and vice versa.

In the present exemplary embodiment, the maintaining means 5 are designed for engaging the objects 2 mentioned after the objects 2 have been ranged by the positioning means 3 in the stacking patterns P and taken into the first buffer zone D, and before the objects 2 are conveyed to the stacking area G by the first and second conveyor 4, 14. Alternatively, the maintaining means 5 are for instance designed for engaging the objects 2 when the objects 2 are located the third station C.

In an advantageous manner, the present maintaining means 5 are designed for engaging at least one other side than the underside mentioned of an object 2 for keeping the object 2 in a particular object position of the associated stacking pattern P on the first and second conveyor 4, 14. Furthermore, it is preferred that the maintaining means 5 are designed for engaging substantially all free lying sides of the objects 2 ranged in the stacking patterns P, at least during the stacking of the objects 2 in the stacking area G. In this manner, a combined stacking pattern P can be kept well in form during transport and during stacking of the objects 2.

The maintaining means 5 are moreover designed for substantially maintaining a horizontal position of each object 2, taken into the stacking area G by the first conveyor 4, when the first conveyor 4 moves from the second to the first position. To this end, the maintaining means 5 are simply designed to prevent a movement, accompanying the first conveyor 4, of each object 2 introduced into the stacking area G by the first conveyor 4, in particular by stopping the object 2 when the first conveyor 4 moves back from the second to the first position. Thus, the first conveyor 4 can simply be slid back below each object 2 while thereupon, the object 2 can be left behind in the stacking area G in a controlled manner on a desired horizontal position.

According to the invention, the maintaining means 5 are designed for filling the spaces 9 without object at least partly with filling means 15 for the purpose of maintaining the stacking patterns P. As a result, the maintaining means can prevent disturbances of the stacking patterns P well during stacking of the respective objects 2, and preferably also during the transport towards the stacking area G. Furthermore, it can thus be well ensured that spaces 9 without objects reach desired positions in a stack 8, for instance for forming an advantageous, stable stacking calculated by the control. The maintaining means 5 of the exemplary embodiment are designed for introducing the filling means 15 at least partly into the spaces 9 without objects of a stacking pattern P after the stacking pattern P has been formed from one or more objects 2 by the positioning means 3. Moreover, the maintaining means 5 are designed for removing the filling means 15 from the spaces 9 without objects again for subsequent use, after each associated stacking pattern P has been brought in the stacking area G into the stack 8 to be formed.

In Fig. 6, schematically, a few positions of the maintaining means 5 are represented. The apparatus 1 is provided with lower guide means 6A, for instance rails divided into different sections. These guide means 6A and maintaining means 5 are designed to cooperate, for guiding the maintaining means 5 from the first buffer zone D, or alternatively, from the positioning means 3, to the stacking area G during transport of underlying objects 2 collected in stacking patterns P. Furthermore, upper guide means 6B are provided for also moving the maintaining means in reverse. At the downstream part C of the positioning means 3, and at the stacking area G, lifting means 6C, 6D are provided for bringing the maintaining means 5 from the lower guide means 6A to the upper guide means 6B and vice versa. Such lifting means 6C, 6D can for instance comprise vertically movable sections of the guide means 6A, 6B.

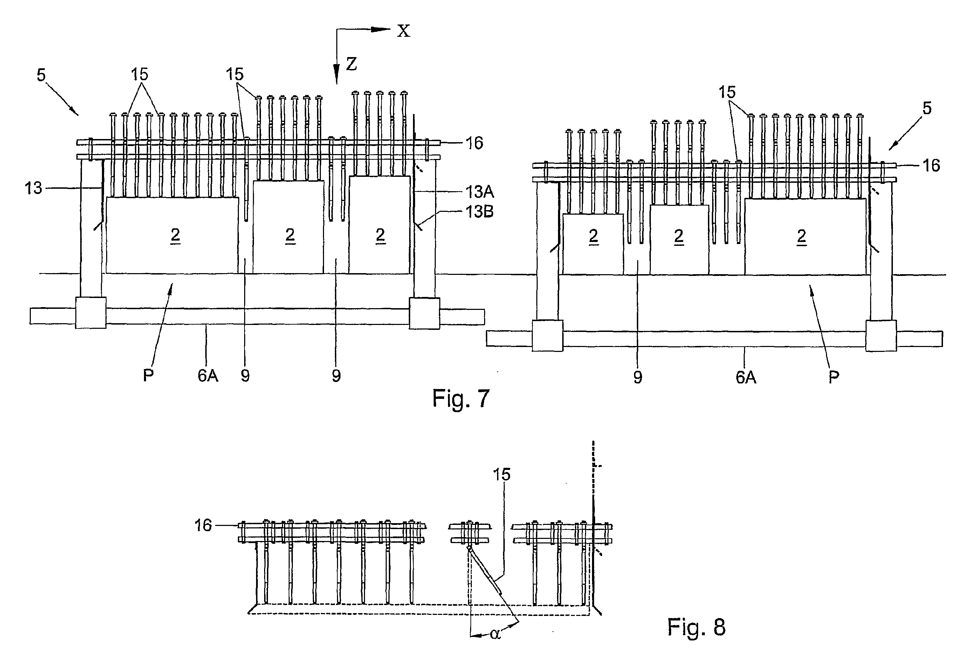

Figs. 7 - 10 show in more detail a first exemplary embodiment of the maintaining means 5. These maintaining means 5 comprise a number of filling means holders 16 to which pin-shaped filling elements 15 are coupled so as to be slideable in substantially vertical direction. The pin-shaped filling elements 15 are disposed in parallel relation, in a horizontal, substantially angular pattern. In the present exemplary embodiment, at least ten parallel rows of ten filling elements 15 each are provided. The filling elements 15 are distributed over a horizontal engaging surface such that this surface approximately corresponds, as to dimensions, with the horizontal stacking surface of the largest stack conveying means 7 to be used. Further, along the engaging surface mentioned, each filling means holder 16 is provided with vertically downward reaching longitudinal plates 13a with slightly slanting, outward bent end edges 13b. Alternatively, the filling elements are disposed in different patterns, for instance circle patterns or in combinations of such patterns and/or different patterns. The pattern of the filling elements to be used depends for instance on the objects to maintain, customer-specific preconditions and the like.

The pin-shaped filling elements 15 can move freely in the vertical direction mentioned, independently of each. As shown in Fig. 8, each pin 15 is also bendable about a horizontal pivot from the vertical position to a forwardly inclined position, and in reversed direction, through an angle α, at least when the filling element 15 is in a position moved downward relative to the holder 16. To this end, each filling elements comprises, for instance, at least two intercoupled parts pivotable through the angle α mentioned. The pivot of each filling element 15 extends substantially parallel to said second horizontal direction Y. The filling means holder 16 is further provided with a number of legs 18 with guide feet 19 for placing the holder 16 on the guide means 6 so as to be slideable in substantially horizontal direction.

As shown in Figs. 6 and 7, during use, a filling means holder 16 with filling means 15 is lowered on each stacking pattern P in the direction Z, after the pattern P has been formed by the positioning apparatus 3 and has been brought in the upstream buffer zone D. Here, a number of the filling elements 15 can arrive at and fill, at least partly, optional spaces 9 without objects extending between the objects 2 and located in the stacking pattern P. Further filling elements 15 are caught by objects 2 and moved upwards. These further, moved back filling elements then preferably apply hardly any forces, if at all, to the underlying objects so that for instance damage to the objects can be prevented. To this end, the filling elements 15 are for instance designed to be lightweight. The stacking pattern P can further be held together and/or be supported on one or more sides by one or more of the vertical longitudinal plates 13 of the filling means holder 16.

Then, in the above-described manner, the stacking pattern P is taken by the second conveyor 14 and first conveyor 4 to the stacking area G. The filling means holder 16 and the filling elements 15 can move along with the stacking pattern P, through guidance via the lower guide means 6A. The filling means holder 16 may for instance be pushed forward by the stacking pattern P and/or be provided with its own drive.

After a horizontal stacking pattern P is introduced into the stacking area by the first conveyor 4, the stacking pattern P can be substantially maintained in the stacking area G by the filling elements 15 engaging thereon and one or more longitudinal plates 13 of the filling means holder 16 while the first conveyor 4 is moved back from the stacking area G. Each object 2 located in the stacking area G and engaged by the filling elements 15 can then automatically descend on an already present stack part, or on the stack conveying means 7 if this means is still empty. The filling elements 15 can then guarantee the positions of the spaces 9 without objects of the patterns P, by stopping one or more neighbouring objects 2 at the respective sides. During release of each object 2, pivotable parts of said filling elements can pivot slightly in upstream direction X so that the object 2 is prevented from being blocked between filling elements 15.

After the first conveyor 4 has been completely moved back from the stacking area G to the stacking pattern receiving zone F, the filling means holder 16 with filling elements 15 can be pulled back from the stacking area G by the respective lifting apparatus 6D, at least be moved upwards in a vertical direction Z'. Then, under the influence of gravity, the raised filling elements 15 can slide down again, to associated starting positions. The filling means holder 15 is further returned via the upper guide 6B to the first buffer zone D for maintaining a subsequent pattern P to be stacked. During stacking, the stack 8 is each time moved down over a suitable distance. When the stack 8 is ready, the stack 8 can be packaged and/or discharged.

An advantage of the present apparatus 1 according to the invention is that with it, objects 2 can first be ranged rapidly in substantially horizontal stacking patterns. After a stacking pattern of objects has been formed, the respective objects can be taken into the stacking area by the conveying means. These steps can be carried out repeatedly, so that the objects are stacked onto each other layer by layer. In this manner, a group of objects can be combined relatively rapidly into a stack. Furthermore, spaces 9 without objects can be accurately built in at desired positions in the stacks. The maintaining means guarantee the positions of the objects and such spaces without objects during transport and during stacking of the objects, after suitable horizontal stacking patterns have been formed from the objects.

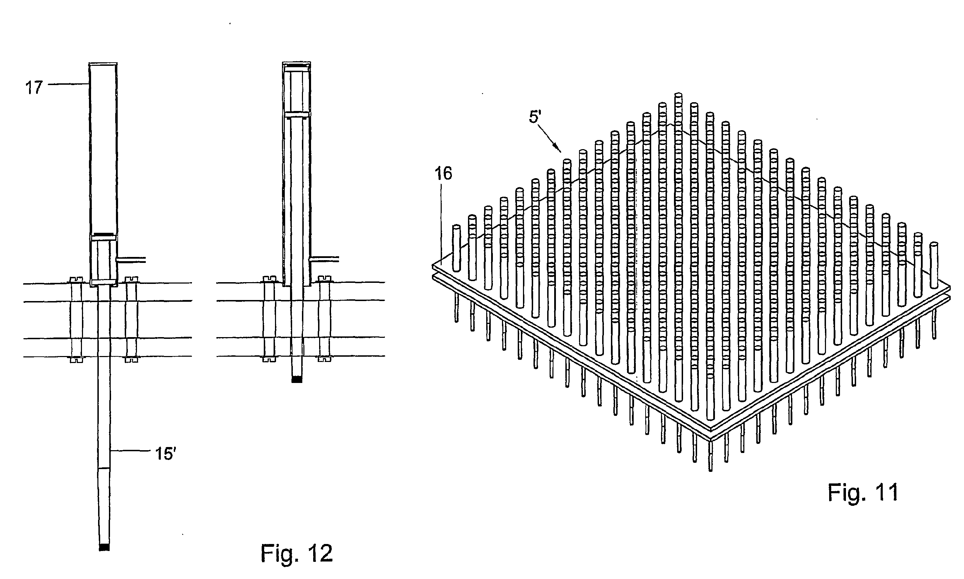

Figs. 11 and 12 show an alternative embodiment of the maintaining means 5. This elaboration is provided with drive means 17 for moving pin-shaped filling elements 15' in vertical direction. In the present exemplary embodiment, the drive means comprise pneumatic or hydraulic pressure cylinders 17 in which the filling elements 15' have been provided as pistons.

According to another alternative elaboration (not shown), for instance engaging means, in particular suction cups or the like are used, which engaging means can engage top sides of objects 2 ranged in the stacking patterns P for keeping the objects in desired horizontal positions during stacking of the objects.

It is self-evident that the invention is not limited to the exemplary embodiments described. Various modifications are possible within the framework of the invention as set forth in the appended claims.

For instance, each substantially horizontal stacking pattern P can comprise one or more objects 2. When the stacking pattern comprises only one or relatively few objects, the pattern may serve as repair pattern for filling in spaces in a preceding pattern. The horizontal stacking pattern can further be a one-dimensional pattern or a two-dimensional pattern.

Furthermore, each stacking pattern P to be brought on a stack 8 can comprise one or more spaces 9 without objects, for instance for obtaining a stable stacking and/or a stacking aligned on the longitudinal side. Such a space 9 can extend from, for instance, an upper side to the lower side of an associated stacking pattern P, along one or more objects P.

Further, stacking pattern maintaining means 5 can be designed in various manners.

The filling means mentioned of the maintaining means can comprise, for instance, rigid parts, elastic parts, inflatable parts and/or the like.

The filling means can comprise, for instance, one or more elastic pins, filling rolls, rigid pins that do not bend, rigid pins with spring mechanism, hollow pins which optionally taper conically, rollers, bellows, balloons, bending pins, elastic cylinder bodies, fluid-pressure controlled means and/or combinations of these or different means.

Further, each filling element may be provided with pivotable or hinged parts, designed to be elastic or not elastic. Moreover, each filling element may for instance be provided with a flexible, elongated guide part and a rigid fixing part movable along the guide part. In that case, the fixing parts can be used for fixing the filling elements during transport of the stacking patterns. During the stacking of each stacking pattern, with the first conveyor being pulled back, such fixing parts can be gradually pulled back, in order that objects can be held at a distance from each other by remaining flexible guide parts and can for instance tilt from the first conveyor in a controlled manner. Movement of the fixing parts can for instance be carried out mechanically.

The filling means holder can further be designed in different manners, for instance with different filling means covering a square, rectangular, curved or otherwise formed pattern or engaging surface.

The apparatus 1 can further be provided with one or more stacking areas 3, various positioning apparatus 3, and one or more object-conveying means of various sorts.

The apparatus needs further for instance not be provided with the buffer zones D, E mentioned.

Furthermore, with the present apparatus and/or method a stack can be stacked in different directions. The objects can for instance be stacked onto each other by supplying objects in desired stacking patterns at an 'underside' of a stack while the stacking patterns are provided with spaces without objects and/or are maintained by maintaining means. Further, a stack can for instance be stacked in a vertical direction, horizontal direction or different direction. Filling means may for instance be disposed so as to be movable in vertical direction, horizontal direction or a different direction, for the purpose of filling spaces without objects.

After being positioned in desired stacking patterns, objects can for instance be placed on a fixation plate, which plate comprises, for instance, toothed pinned forks. The fixation plate can then be moved, after which the objects are placed on a carrier by means of a pinned fork and/or the like.

The positioning means can be designed in various manners. For instance, the positioning means can be configured for, first, collecting the objects and then spreading them relative to each other in at least one direction (X', Y'), for instance for forming the spaces without objects. Alternatively, the positioning means may be designed for first spreading the objects relative to each other in at least one direction (X', F') or for supplying the objects in a spread manner, to, thereupon, collecting the objects such that therefrom, stacking patterns are formed provided with the desired or mentioned spaces without objects.

## Claims

1. An apparatus for stacking objects, the apparatus being provided with positioning means (3) which are designed for ranging the objects (2) in specific, substantially horizontal stacking patterns (P), while the apparatus (1) is provided with conveying means (4, 14) which are designed for conveying the objects (2) from the positioning means (3) to a stacking area (G) for stacking the objects (2) onto each other, the conveying means (4, 14) being at least provided with a first conveyor (4, 14) designed for supporting each object (2) during transport at an underside, **characterized in that** at least several of said objects have different shapes and/or dimensions, wherein at least a number of said stacking patterns (P) are provided with one or more spaces (9) without objects, the apparatus (1) being provided with stacking pattern maintaining means (5) which are at least designed for substantially maintaining said stacking patterns (P) during the stacking of each object (2) in the stacking area (G), while said maintaining means (5) are designed for substantially maintaining said stacking patterns (P) during transport of the objects (2) from the positioning means (3) to the stacking area, wherein the maintaining means (5) are designed for filling the spaces (9) without objects at least partly with filling means (15) for the purpose of maintaining the stacking patterns (P) that are provided with the spaces (9) without objects.

2. An apparatus according to claim 1, wherein said positioning means are designed for positioning objects (2) such that said spaces (9) without objects are obtained.

3. An apparatus according to any of the preceding claims, wherein the maintaining means (5) are designed for introducing the filling means (15) into said spaces (9) without objects after an associated stacking pattern (P) has been formed by the positioning means (3) from said objects (2).

4. An apparatus according to any of the preceding claims, wherein the maintaining means (5) are designed for removing said filling means (15) from said spaces (9) without objects after associated stacking patterns (P) have been introduced into the stacking area (G).

5. An apparatus according to any one the preceding claims, wherein the maintaining means (5) are provided with at least one filling means holder (16), while said filling means (15) have been coupled to said filling means holder (16).

6. An apparatus according to claim 5, wherein the filling means holder (16) is movable at least in vertical direction for bringing filling means (15) into and/or out of said spaces (9) without objects of a stacking pattern (P).

7. An apparatus according to any one of the preceding claims, wherein said filling means comprise filling elements (15) which are each disposed so as to be movable at least in vertical direction.

8. An apparatus according to claims 5 and 7, wherein the filling elements (15) are each coupled to the filling means holder (16) so as to be movable, in particular slideable, each in substantially vertical direction.

9. An apparatus according to claim 7 or 8, provided with drive means (17) for moving the filling elements (15') each in vertical direction (Z, Z').

10. An apparatus according to any one of claims 7 - 9, wherein each filling element (15) is also pivotable through a particular angle (α) about a horizontal pivot, at least when the filling element (15) is in a position moved downwards.

11. An apparatus according to any one of claims 7 - 10, wherein each filling element is provided with a flexible, elongated guide part and a rigid fixation part movable along the guide part.

12. An apparatus according to any one of the preceding claims, wherein said maintaining means (5) are movable in a direction (X) from the positioning means (3) to the stacking area (G), for the purpose of maintaining said stacking patterns (P) during transport of the objects (2).

13. An apparatus according to claim 12, wherein said maintaining means (5) after stacking the objects, can each time be moved back from the stacking area (G) to the positioning means (3) preferably such that the returning maintaining means (5) are at a distance from the following conveyed objects (2).

14. An apparatus according to any one of the preceding claims, provided with guide means (6), for instance rails, for guiding the maintaining means (5) at least in one direction from the positioning means (3) to the stacking area (G) and preferably also in opposite direction.

15. An apparatus according to any one of the preceding claims, wherein said maintaining means (5) are designed for engaging said objects (2) after the objects (2) have been ranged by the positioning means (2) in said stacking patterns (P).

16. An apparatus according to any one of the preceding claims, wherein said maintaining means (5) are designed for engaging said objects (2) before the objects (2) are conveyed to the stacking area (G) by said conveying means (4, 14).

17. An apparatus according to any one of the preceding claims, wherein the maintaining means (5) are designed for engaging at least one other side than said underside of an object (2) for holding the object (2) in a particular object position of the associated stacking pattern (P) on the at least first conveyor (4).

18. An apparatus according to any one of the preceding claims, wherein the first conveyor (4) can be moved from a first position outside the stacking area (G) to a second position within the stacking area (G) and in opposite direction, for bringing objects (2) into the stacking area (G).

19. An apparatus according to claim 18, wherein the maintaining means (5) are at least designed for substantially maintaining a horizontal position of each object (2) introduced by the first conveyor (4) into the stacking area (G) when the first conveyor (4) moves from the second to the first position.

20. An apparatus according to any one of the preceding claims, wherein the maintaining means (5) are at least designed to substantially prevent a movement, accompanying the first conveyor, of each object (2) introduced into the stacking area (G) by the first conveyor (4), when the first conveyor (4) moves from the second to the first position, while the maintaining means (5) are, in particular, designed for stopping an object (2) at least in horizontal direction when the first conveyor (4) moves from the second to the first position.

21. An apparatus according to any one of the preceding claims, wherein said first conveyor comprises at least one movable plate.

22. An apparatus according to claim 21, wherein the first conveyor comprises at least one telescopically extending plate.

23. An apparatus according to any one of the preceding claims, provided with at least a second conveyor (14) extending between said positioning means (3) and said first conveyor (4).

24. An apparatus according to any one of the preceding claims, wherein the maintaining means (5) are at least designed for engaging sides lying free of objects (2) ranged in the stacking patterns (P), at least during the stacking of the objects (2) in the stacking area (G).

25. An apparatus according to any one of the preceding claims, wherein at least said stacking patterns are two-dimensional patterns.

26. An apparatus according to any one of the preceding claims, wherein the positioning means (3) are designed for, each time, forming a successive stacking pattern (P1) which is substantially complementary to a previously formed stacking pattern (P0).

27. An apparatus according to any one of the preceding claims, wherein the positioning means (3) are designed for successively forming at least two stacking patterns (P0, P1) of objects (2) such that in a stacked condition, a top side of the at least two stacking patterns (P0, P1) extends along a substantially horizontal plane.

28. An apparatus according to at least claim 2, wherein the positioning means (3) are designed for, first, collecting the objects (2) and, thereupon, spreading them relative to each other in at least one direction (X', Y') for forming said spaces without objects.

29. An apparatus according to at least claim 28, wherein the positioning means (3) are provided with at least one spreading station (B, C) which is designed for spreading a compressed layer of objects (2) in a respective spreading direction (X', Y')

30. An apparatus according to claim 28 or 29, wherein the positioning means are provided with at least two spreading stations (B, C) which are designed for successively spreading objects (2) in different spreading directions (X', Y').

31. Use of an apparatus according to any one of the preceding claims for stacking objects (2).

32. A method for stacking objects, for instance utilizing an apparatus according to any one of claims 1 - 30, wherein objects (2) are ranged in specific, substantially horizontal stacking patterns (P), while then, the objects (2) are conveyed by a conveyor (4) to a stacking area (G) to be stacked, the conveyor (4) being designed for supporting each object during transport at an underside, while maintaining means (5) substantially maintain said stacking patterns (P) during stacking of each object (2) in the stacking area (G), the maintaining means (5) moving along with the objects (2) during transport of the objects to the stacking area (G), wherein at least a number of said stacking patterns (P) are provided with one or more spaces (9) without objects, while said spaces (9) without objects are maintained by the maintaining means during stacking of the stacking patterns (P), wherein filling means are introduced, at least partly, into said spaces (9) without objects for maintaining the stacking patterns (P) that are provided with the spaces (9).

33. A method according to claim 32, wherein the filling means are each time removed from a stacking pattern (P) during and/or after the stacking of associated products (2).

34. A method according to any one of claims 32-33, wherein the objects (2) are first collected, and are then spread relative to each other in at least one direction (X', Y') for forming said spaces without objects.

35. A method according to claim 34, wherein at least two spreading stations (B, C) successively spread objects (2) in different spreading directions (X', Y').

36. A method according to any of claims 32-35, wherein at least several of said objects have different shapes and/or dimensions.

37. A goods distribution system, provided with an apparatus according to any one of claims 1 - 30.

## Patentansprüche

1. Vorrichtung zum Stapeln von Gegenständen, die mit einer Positioniereinrichtung (3) versehen ist, welche so ausgeführt ist, dass sie die Gegenstände (2) in speziellen, im wesentlichen horizontalen, Stapelmustern (P) anordnet, wobei die Vorrichtung mit einer Fördereinrichtung (4, 14) ausgestattet ist, die so ausgebildet ist, dass sie die Gegenstände (2) von der Positioniereinrichtung (3) zu einem Stapelbereich (G) befördert, um die Gegenstände (2) übereinander zu stapeln, und die Fördereinrichtung (4, 14) mindestens mit einem ersten Förderer (4, 14) ausgestattet ist, der zur Abstützung jedes Gegenstandes (2) während des Transports an der Unterseite ausgebildet ist,
**dadurch gekennzeichnet, dass**
mindestens einige der Gegenstände unterschiedliche Formen und/oder Abmessungen aufweisen, wobei mindestens eine Anzahl der Stapelmuster (P) mit einen oder mehrere Räume (9) ohne Gegenstände hat, die Vorrichtung (1) mit einer Stapelmuster-Aufrechterhaltungseinrichtung (5) ausgestattet ist, welche zumindest so ausgebildet ist, dass die Stapelmuster (P) beim Stapeln jedes Gegenstandes (2) im Stapelbereich (G) im wesentlichen aufrechterhalten bleiben, und die Stapelmuster-Aufrechterhaltungseinrichtung (5) so ausgebildet ist, dass die Stapelmuster (P) im wesentlichen während des Transports der Gegenstände (2) von der Positioniereinrichtung (3) zum Stapelbereich aufrechterhalten bleiben, wobei die Stapelmuster-Aufrechterhaltungseinrichtung (5) zum Auffüllen der Räume (9) ohne Gegenstände zum Zweck der Aufrechterhaltung der Stapelmuster (P), welche Räumen (9) ohne Gegenstände haben, zumindest teilweise mit einem Füllmittel (15) versehen ist.

2. Vorrichtung nach Anspruch 1, bei der die Positioniereinrichtung zur Positionierung von Gegenständen (2) derart ausgebildet ist, dass Räume (9) ohne Gegenstände erhalten werden.

3. Vorrichtung nach einem der vorhergehenden Ansprüche, bei der die Stapelmuster-Aufrechterhaltungseinrichtung (5) zum Eintrag des Füllmittels (15) in die Räume (9) ohne Gegenstände ausgebildet ist, nachdem mit den Gegenständen (2) ein entsprechendes Stapelmuster (P) von der Positioniereinrichtung (3) ausgebildet wurde.

4. Vorrichtung nach den vorhergehenden Ansprüchen, bei der die Stapelmuster-Aufrechterhaltungseinrichtung (5) zur Beseitigung des Füllmittels (15) aus den Räumen (9) ohne Gegenstände ausgebildet ist, nachdem die entsprechenden Stapelmuster (P) in den Stapelbereich (G) eingebracht wurden.

5. Vorrichtung nach den vorhergehenden Ansprüchen, bei der die Stapelmuster-Aufrechterhaltungseinrichtung (5) mit mindestens einem Füllmittelhalter (16) ausgestattet ist, wobei das Füllmittel (15) mit dem Füllmittelhalter (16) verbunden ist.

6. Vorrichtung nach Anspruch 5, bei der der Füllmittelhalter (16) zum Eintrag des Füllmittels (15) in die Räume und/oder zum Austrag desselben aus den Räumen (9) ohne Gegenstände eines Stapelmusters (P) mindestens in senkrechter Richtung bewegbar ist.

7. Vorrichtung nach einem der vorhergehenden Ansprüche, bei der das Füllmittel Füllelemente (15) darstellt, die jeweils so eingebracht sind, dass sie zumindest in senkrechter Richtung bewegbar sind.

8. Vorrichtung nach den Ansprüchen 5 und 7, bei der jedes Füllelement (15) mit dem Füllmittelhalter (16) derart verbunden ist, dass es jeweils im wesentlichen in senkrechter Richtung bewegbar, insbesondere gleitbar, ist.

9. Vorrichtung nach Anspruch 7 oder 8, die zur Bewegung jedes Füllelements (15') in senkrechter Richtung (Z, Z') mit einer Antriebseinrichtung ausgestattet (17) ist.

10. Vorrichtung nach einem der Ansprüche 7 bis 9, bei der jedes Füllelement (15) ferner um einen bestimmten Winkel (α( um einen horizontalen Drehzapfen mindestens dann drehbar ist, wenn sich das Füllelement (15) in einer Position befindet, in der es nach unten bewegt wird.

11. Vorrichtung nach einem der Ansprüche 7 bis 10, bei der jedes Füllelement mit einem flexiblen, länglichen Führungsteil und einem starren Befestigungsteil versehen ist, welches entlang des Führungsteils bewegbar ist.

12. Vorrichtung nach einem der vorhergehenden Ansprüche, bei der zur Aufrechterhaltung der Stapelmuster (P) während des Transports der Gegenstände die Stapelmuster-Aufrechterhaltungseinrichtung (5) von der Positioniereinrichtung (3) zum Stapelbereich (G) in Richtung (X) bewegbar ist.

13. Vorrichtung nach Anspruch 12, bei der die Stapelmuster-Aufrechterhaltungseinrichtung (5) nach dem Stapeln der Gegenstände jederzeit aus dem Stapelbereich (G) bevorzugt derart zur Positioniereinrichtung (3) zurückbewegt werden kann, dass die zurückfahrende Stapelmuster-Aufrechterhaltungseinrichtung (5) sich in einem Abstand zu den folgenden beförderten Gegenständen (2) befindet.

14. Vorrichtung nach einem der vorhergehenden Ansprüche, die zur Führung der Stapelmuster-Aufrechterhaltungseinrichtung (5) mindestens in einer Richtung von der Positioniereinrichtung (3) zum Stapelbereich (G), und bevorzugt auch in die entgegengesetzte Richtung, mit einer Führungseinrichtung (6), beispielsweise Schienen, ausgestattet ist.

15. Vorrichtung nach einem der der vorhergehenden Ansprüche, bei der die Stapelmuster-Aufrechterhaltungseinrichtung (5) für einen Eingriff mit den Gegenständen (2) ausgebildet ist, nachdem die Gegenstände (2) von der Positioniereinrichtung (3) in Stapelmustern (P) angeordnet wurden.

16. Vorrichtung nach einem der der vorhergehenden Ansprüche, bei der die Stapelmuster-Aufrechterhaltungseinrichtung (5) für einen Eingriff mit den Gegenständen (2) ausgebildet ist, bevor die Gegenstände (2) von der Fördereinrichtung (4, 14) zum Stapelbereich (G) gefördert werden.

17. Vorrichtung nach einem der der vorhergehenden Ansprüche, bei der die Stapelmuster-Aufrechterhaltungseinrichtung (5) zum Halten des Gegenstandes (2) in einer bestimmten Position des Gegenstands des entsprechenden Stapelmusters (P) auf dem mindestens ersten Förderer (4) für einen Eingriff mit mindestens einer anderen als der Unterseite eines Gegenstandes (2) ausgestattet ist.

18. Vorrichtung nach einem der der vorhergehenden Ansprüche, bei der der erste Förderer (4) zur Einbringung von Gegenständen (2) in den Stapelbereich (G) von einer ersten Position außerhalb vom Stapelbereich (G) in eine zweite Position innerhalb des Stapelbereichs (G) und in die entgegengesetzte Richtung bewegt werden kann.

19. Vorrichtung nach Anspruch 18, bei der die Stapelmuster-Aufrechterhaltungseinrichtung (5) mindestens derart ausgebildet ist, dass die horizontale Position jedes Gegenstandes (2) im Wesentlichen aufrechterhalten wird, der vom ersten Förderer (4) in den Stapelbereich (G) eingebracht wird, wenn sich der erste Förderer (4) aus der zweiten Position in die erste Position bewegt.

20. Vorrichtung nach einem der der vorhergehenden Ansprüche, bei der die Stapelmuster-Aufrechterhaltungseinrichtung (5) mindestens derart ausgebildet ist, dass sie im wesentlichen eine den ersten Förderer begleitende Bewegung jedes Gegenstandes (2) verhindert, der vom ersten Förderer (4) in den Stapelbereich (G) eingebracht wird, wenn sich der erste Förderer (4) aus der zweiten in die erste Position bewegt, wobei die Stapelmuster-Aufrechterhaltungseinrichtung (5) insbesondere derart ausgebildet ist, dass sie einen Gegenstand (2) zumindest in horizontaler Richtung anhält, wenn sich der erste Förderer (4) aus der zweiten in die erste Position bewegt.

21. Vorrichtung nach einem der der vorhergehenden Ansprüche, bei der der erste Förderer (4) mindestens eine bewegbare Platte aufweist.

22. Vorrichtung nach Anspruch 21, bei der der erste Förderer (4) mindestens eine teleskopisch ausfahrbare Platte aufweist.

23. Vorrichtung nach einem der der vorhergehenden Ansprüche, die mit mindestens einem zweiten Förderer (14) ausgestattet ist, der sich zwischen der Positioniereinrichtung (3) und dem ersten Förderer (4) erstreckt.

24. Vorrichtung nach einem der der vorhergehenden Ansprüche, bei der die Stapelmuster-Aufrechterhaltungseinrichtung (5) mindestes so ausgebildet ist, daß sie, zumindest während des Stapelns der Gegenstände (2) im Stapelbereich (G), die Seiten ergreift, die frei von Gegenständen (2) sind, die in den Stapelmustern (P|) angeordnet sind.

25. Vorrichtung nach einem der der vorhergehenden Ansprüche, bei der zumindest die genannten Stapelmuster zweidimensionale Muster sind.

26. Vorrichtung nach einem der der vorhergehenden Ansprüche, bei der die Positioniereinrichtung (3) derart ausgebildet ist, dass sie jedesmal ein nachfolgendes Stapelmuster (P1) bildet, dass im wesentlichen zu einem vorher ausgebildeten Stapelmuster (P0) komplementär ist.

27. Vorrichtung nach einem der vorhergehenden Ansprüche, bei der die Positioniereinrichtung (3) derart ausgebildet ist, dass sie aufeinanderfolgend mindestens zwei Stapelmuster (P0, P1) von Gegenständen (2) derart bildet, dass, im gestapelten Zustand, die obere Seite der mindestens zwei Stapelmuster (P0, P1) sich im wesentlichen in einer horizontalen Ebene erstreckt.

28. Vorrichtung mindestens nach Anspruch 2, bei der die Positioniereinrichtung (3) derart ausgebildet ist, dass sie zunächst die Gegenstände (2) sammelt und sie danach zur Bildung der Räume (9) ohne Gegenstände relativ zueinander in mindestens einer Richtung (X', Y') verteilt.

29. Vorrichtung mindestens nach Anspruch 28, bei der die Positioniereinrichtung (3) mit mindestens einer Verteilerstation (B, C) ausgestattet ist, die zur Verteilung einer komprimierten Schicht von Gegenständen (2) in einer entsprechenden Verteilungsrichtung (X', Y') ausgebildet ist.

30. Vorrichtung mindestens nach Anspruch 28 oder 29, bei der die Positioniereinrichtung (3) mit mindestens zwei Verteilerstationen (B, C) ausgestattet ist, die zur aufeinanderfolgenden Verteilung von Gegenständen (2) in unterschiedlichen Verteilungsrichtungen (X', Y') ausgebildet sind.

31. Verwendung einer Vorrichtung nach einem der vorhergehenden Ansprüche zum Stapeln von Gegenständen (2).

32. Verfahren zum Stapeln von Gegenständen, wobei beispielsweise eine Vorrichtung nach einem der Ansprüche 1 bis 30 verwendet wird, in der Gegenstände (2) in speziellen, im wesentlichen horizontalen Stapelmustern (P) anordnet sind, wobei die Gegenstände (2) dann von einem Förderer (4) zur Stapelung zu einem Stapelbereich (G) befördert werden und der Förderer (4 zur Abstützung jedes Gegenstandes (2) während des Transports an der Unterseite ausgebildet ist und eine Stapelmuster-Aufrechterhaltungseinriehtung (5) die Stapelmuster (P) beim Stapeln jedes Gegenstandes (2) im Stapelbereich (G) im wesentlichen aufrecht erhält, und die Stapelmuster-Aufrechterhaltungseinrichtung (5) sich mit den Gegenständen (2) während des Transports der Gegenstände zum Stapelbereich (G) bewegt, wobei mindestens Anzahl der Stapelmuster (P) mit einem oder mehreren Räumen (9) ohne Gegenstände vorgesehen ist, und die Räume (9) ohne Gegenstände von der Stapelmuster-Aufrechterhaltungseinrichtung (5) während des Stapelns der Stapelmuster (P) aufrechterhalten werden, und bei dem, mindestens teilweise, Füllmittel (15) in die Räume (9) ohne Gegenstände zur Aufrechterhaltung der mit den Räumen (9) versehenen Stapelmuster (P) eingebracht werden,

33. Verfahren nach Anspruch 32, bei dem das Füllmittel jedesmal aus einem Stapelmuster (P) während und/oder nach dem Stapeln der entsprechenden Produkte entfernt wird.

34. Verfahren nach einem der Ansprüche 32 bis 33, in dem die Gegenstände (2) zur Bildung der Räume ohne Gegenstände zunächst gesammelt und dann relativ zueinander in mindestens einer Richtung (X', Y') verteilt werden.

35. Verfahren nach Anspruch 34, bei dem mindestens zwei Verteilerstationen (B, C) aufeinanderfolgend Gegenstände (2) in unterschiedliche Verteilungsrichtungen (X', Y') verteilen.

36. Verfahren nach einem der Ansprüche 32 bis 35, in dem mindestens einige der Gegenstände verschiedene Formen und/oder Abmessungen haben.

37. Güterverteilungssystem, das mit einer Vorrichtung nach einem der Ansprüche 1 bis 30 ausgestattet ist.

## Revendications

1. Appareil pour gerber ou empiler des objets, l'appareil étant muni de moyens de positionnement (3) qui sont conçus pour ranger les objets (2) selon des configurations de gerbage spécifiques, sensiblement horizontales (P), tandis que l'appareil (1) est équipé de moyens de transport (4,14) qui sont conçus pour transporter les objets (2) des moyens de positionnement (3) vers une zone de gerbage (G) pour gerber les objets (2) les uns sur les autres, les moyens de transport (4,14) étant au moins munis d'un premier transporteur (4,14) conçu pour supporter chaque objet (2) durant le transport au niveau d'un dessous, **caractérisé en ce qu'**au moins plusieurs desdits objets ont différentes formes et/ou dimensions, dans lequel au moins un certain nombre desdites configurations de gerbage (P) sont équipées d'un ou de plusieurs espaces (9) sans objets, l'appareil (1) étant muni de moyens maintenant les configurations de gerbage (5) qui sont au moins conçus pour maintenir sensiblement lesdites configurations de gerbage (P) durant le gerbage de chaque objet (2) dans la zone de gerbage (G), tandis que lesdits moyens de maintien (5) sont conçus pour maintenir sensiblement lesdites configurations de gerbage (P) durant le transport des objets (2) des moyens de positionnement (3) vers la zone de gerbage, dans lequel les moyens de maintien (5) sont conçus pour remplir les espaces (9) sans objets au moins partiellement avec des moyens de remplissage (15) dans le but de maintenir les configurations de gerbage (P) qui sont équipées des espaces (9) sans objets.

2. Appareil selon la revendication 1, dans lequel lesdits moyens de positionnement sont conçus pour positionner des objets (2) de telle sorte que lesdits espaces (9) sans objets soient obtenus.

3. Appareil selon une quelconque des revendications précédentes, dans lequel les moyens de maintien (5) sont conçus pour introduire les moyens de remplissage (15) dans lesdits espaces (9) sans objets après qu'une configuration de gerbage associée (P) a été formée par les moyens de positionnement (3) à partir desdits objets (2).

4. Appareil selon une quelconque des revendications précédentes, dans lequel les moyens de maintien (5) sont conçus pour éliminer lesdits moyens de remplissage (15) à partir desdits espaces (9) sans objets après que des configurations de gerbage associées (P) ont été introduites dans ladite zone de gerbage (G).

5. Appareil selon une quelconque des revendications précédentes, dans lequel les moyens de maintien (5) sont munis d'au moins un support (16) des moyens de remplissage, tandis que lesdits moyens de remplissage (15) ont été reliés audit support (16) des moyens de remplissage.

6. Appareil selon la revendication 5, dans lequel le support (16) des moyens de remplissage est mobile au moins en direction verticale pour amener les moyens de remplissage (15) dans et/ou hors desdits espaces (9) sans objets d'une configuration de gerbage (P).

7. Appareil selon une quelconque des revendications précédentes, dans lequel lesdits moyens de remplissage comprennent des éléments de remplissage (15) qui sont disposés chacun de façon à être mobiles au moins en direction verticale.

8. Appareil selon les revendications 5 et 7, dans lequel les éléments de remplissage (15) sont reliés chacun au support (16) des moyens de remplissage de façon à être mobiles, en particulier en pouvant coulisser, chacun dans une direction sensiblement verticale.

9. Appareil selon la revendication 7 ou 8, muni de moyens d'entraînement (17) pour déplacer les éléments de remplissage (15') chacun en direction verticale (Z,Z').

10. Appareil selon une quelconque des revendications 7-9, dans lequel chaque élément de remplissage (15) peut également pivoter d'un angle particulier (α) autour d'un pivot horizontal, au moins quand l'élément de remplissage (15) se trouve dans une position déplacée vers le bas.

11. Appareil selon une quelconque des revendications 7-10, dans lequel chaque élément de remplissage est muni d'une partie de guidage souple, allongée, et d'une partie de fixation rigide déplaçable le long de la partie de guidage.

12. Appareil selon une quelconque des revendications précédentes, dans lequel lesdits moyens de maintien (5) sont mobiles dans une direction (X) à partir des moyens de positionnement (3) vers la zone de gerbage (G), dans le but de maintenir lesdites configurations de gerbage (P) durant le transport des objets (2).

13. Appareil selon la revendication 12, dans lequel lesdits moyens de maintien (5) après gerbage des objets, peuvent chaque fois reculer de la zone de gerbage (G) vers les moyens de positionnement (3) de préférence de telle façon que les moyens de maintien qui reviennent (5) soient à une distance des objets transportés qui suivent (2).

14. Appareil selon une quelconque des revendications précédentes, muni de moyens de guidage (6), par exemple des rails, pour guider les moyens de maintien (5) au moins dans une direction à partir des moyens de positionnement (3) vers la zone de gerbage (G) et, de préférence, également dans la direction opposée.

15. Appareil selon une quelconque des revendications précédentes, dans lequel lesdits moyens de maintien (5) sont conçus pour engager lesdits objets (2) après que les objets (2) ont été rangés par les moyens de positionnement (5) dans lesdites configurations de gerbage (P).

16. Appareil selon une quelconque des revendications précédentes, dans lequel lesdits moyens de maintien (5) sont conçus pour engager lesdits objets (2) avant que les objets (2) soient transportés vers la zone de gerbage (G) par lesdits moyens de transport (4,14).

17. Appareil selon une quelconque des revendications précédentes, dans lequel les moyens de maintien (5) sont conçus pour engager au moins un autre côté que ledit dessous d'un objet (2) pour maintenir l'objet (2) dans une position particulière de la configuration de gerbage associée (P) sur au moins le premier transporteur (4).

18. Appareil selon une quelconque des revendications précédentes, dans lequel le premier transporteur (4) peut se déplacer d'une première position extérieure à la zone de gerbage (G) vers une seconde position à l'intérieur de la zone de gerbage (G) et dans une direction opposée, pour amener des objets (2) dans la zone de gerbage (G).

19. Appareil selon la revendication 18, dans lequel les moyens de maintien (5) sont au moins conçus pour maintenir sensiblement une position horizontale de chaque objet (2) introduit par le premier transporteur (4) dans la zone de gerbage (G) quand le premier transporteur (4) se déplace de la seconde position vers la première position.

20. Appareil selon une quelconque des revendications précédentes, dans lequel les moyens de maintien (5) sont au moins conçus pour empêcher sensiblement un mouvement, accompagnant le premier transporteur, de chaque objet (2) introduit dans la zone de gerbage (G) par le premier transporteur (4), quand le premier transporteur (4) se déplace de la seconde position vers la première position, tandis que les moyens de maintien (5) sont, en particulier, conçus pour arrêter un objet (2) au moins en direction horizontale quand le premier transporteur (4) se déplace de la seconde position vers la première position.

21. Appareil selon une quelconque des revendications précédentes, dans lequel ledit premier transporteur comprend au moins une plaque mobile.

22. Appareil selon la revendication 21, dans lequel le premier transporteur comprend au moins une plaque s'étendant de manière télescopique.

23. Appareil selon une quelconque des revendications précédentes, équipé d'au moins un second transporteur (4) s'étendant entre lesdits moyens de positionnement (3) et ledit premier transporteur (4).

24. Appareil selon une quelconque des revendications précédentes, dans lequel les moyens de maintien (5) sont au moins conçus pour engager des côtés se trouvant dépourvus d'objets (2) rangés dans les configurations de gerbage (P), au moins durant le gerbage des objets (2) dans la zone de gerbage (G).

25. Appareil selon une quelconque des revendications précédentes, dans lequel au moins lesdites configurations de gerbage sont des configurations bidimensionnelles.

26. Appareil selon une quelconque des revendications précédentes, dans lequel les moyens de positionnement (3) sont conçus pour former, chaque fois, une configuration de gerbage successive (P1) qui est sensiblement complémentaire d'une configuration de gerbage préalablement réalisée (PO).

27. Appareil selon une quelconque des revendications précédentes, dans lequel les moyens de positionnement (3) sont conçus pour former, successivement, au moins deux configurations de gerbage (P0, P1) d'objets (2), de telle façon que, dans une condition gerbée, un côté supérieur d'au moins deux configurations de gerbage (P0, P1) s'étendent le long d'un plan sensiblement horizontal.

28. Appareil selon au moins la revendication 2, dans lequel les moyens de positionnement (3) sont conçus pour recueillir, en premier, les objets (2) et, sur ce, les étaler les uns par rapport aux autres dans au moins une direction (X', Y') pour former lesdits espaces sans objets.

29. Appareil selon au moins la revendication 28, dans lequel les moyens de positionnement (3) sont munis d'au moins un poste d'étalement (B, C) qui est conçu pour étaler une couche comprimée d'objets (2) dans une direction d'étalement respective (X', Y').

30. Appareil selon la revendication 28 ou 29, dans lequel les moyens de positionnement sont munis d'au moins deux postes d'étalement (B, C) qui sont conçus pour étaler successivement des objets (2) dans des directions d'étalement différentes.

31. Utilisation d'un appareil selon une quelconque des revendications précédentes pour gerber des objets (2).

32. Procédé pour gerber des objets, par exemple en utilisant un appareil selon une quelconque des revendications 1-30, dans lequel des objets (2) sont rangés dans des configurations de gerbage spécifiques, sensiblement horizontales (P), tandis que, ensuite, les objets (2) sont transportés par un transporteur (4) vers une zone de gerbage (G) à gerber, le transporteur (4) étant conçu pour supporter chaque objet durant le transport au niveau d'un dessous, tandis que des moyens de maintien (5) maintiennent sensiblement lesdites configurations de gerbage (P) durant le gerbage de chaque objet (2) dans la zone de gerbage (G), les moyens de maintien (5) se déplaçant avec les objets (2) durant le transport des objets vers la zone de gerbage (G), dans lequel au moins un certain nombre desdites configurations de gerbage (P) sont munies d'un ou de plusieurs espaces (9) sans objets, tandis que lesdits espaces (9) sans objets sont maintenus par les moyens de maintien durant le gerbage des configurations de gerbage (P), dans lequel des moyens de remplissage sont introduits, au moins partiellement, dans lesdits espaces (9) sans objets pour maintenir les configurations de gerbage (P) qui sont munies des espaces (9).

33. Procédé selon la revendication 32, dans lequel les moyens de remplissage sont retirés chaque fois d'une configuration de gerbage (P) durant et/ou après le gerbage de produits associés (2).

34. Procédé selon une quelconque des revendications 32-33, dans lequel les objets (2) sont tout d'abord recueillis, et sont ensuite étalés les uns par rapport aux autres dans au moins une direction (X', Y') pour former lesdits espaces sans objets.

35. Procédé selon la revendication 34, dans lequel au moins deux postes d'étalement (B, C) étalent successivement des objets (2) dans des directions d'étalement différentes (X', Y').

36. Procédé selon une quelconque des revendications 32-35, dans lequel au moins plusieurs desdits objets ont différentes formes et/ou dimensions.

37. Système de distribution de marchandises, muni d'un appareil selon une quelconque des revendications 1-30.
